# EUROPEAN PATENT APPLICATION

(11) **EP 1 724 148 A1**
(43) Date of publication of application: **22.11.2006**
(21) Application number: 05381023.0
(22) Date of filing: 18.05.2005
(51) Int. Cl.: B60N 2/18, B60N 2/66, B60N 2/48

(54) **Adjustable seat for motor vehicle**

(71) Applicant: GRUPO ANTOLIN-INGENIERIA, S.A., 09007 Burgos (ES)
(72) Inventor: Perez Molina, Silvia, 09001, Burgos (ES); Lugo Rodriguez, Omar, 09002, Burgos (ES)
(74) Representative: Esteban Perez-Serrano, Maria Isabel

(57) **Abstract**

The object of the present invention is an adjustable seat for motor vehicle which allows the inclination of the bench, the height of the lumbar region and the height of the headrest to be adjusted independently, and which has a medullary cushion which is compressed and expanded depending on the adjustment in height of the lumbar area and which due to its high breathability, provides the seat with ventilation in the area of the occupant's back. Likewise, it has a light-weight load-bearing structure both of the back and of the seat, as well as being compact, which allows the final volume of the same to be very reduced, it is also possible to locate the sheet in both the front and in the rear seating area of the vehicle.

## Description

### OBJECT OF THE INVENTION

The object of the present invention is an adjustable seat for motor vehicle which allows the inclination of the bench, the height of the lumbar region and the height of the headrest to be adjusted independently.

Also, due to the special configuration of the component elements, the invention is characterized in the composition of the central structure thereof, with a medullary cushion which is compressed and expanded depending on the adjustment in height of the lumbar area and which due to the high breathability thereof, provides the seat with ventilation in the area of the occupant's back.

The invention is characterized likewise, in the lightness of both the back and the seat structure, as well as its compactness which permits the final volume of the same to be very reduced, it also being possible to locate in both the front and in the rear seating area of the vehicle.

### BACKGROUND OF THE INVENTION

Seats are well-known in the state of the art which consist of a frame generally formed by metallic bars, which are covered with foam and a textile jacket, increasing their volume and reducing habitability in the interior of the vehicle.

Headrest systems are known according to the seat described previously. An example corresponds to the patents with publication number US20040021358 and EP1375244, which confer great complexity, weight and volume to the whole apparatus.

These systems have a complex mechanism to provide the headrest with a movement combining translation and rotation, whereby the weight and final volume of the seat is greatly increased reducing the habitability of the interior of the vehicle.

Likewise, the patents are known with publication numbers EP1241047 and FR2561182 which disclose means of regulating the height of the back, where in the first of them, the patent with publication number EP1241047, by elevating the area of the shoulders, a space is created in the medullary area, so that a part of the user's spine is unsupported, with the ensuing physical danger and lack of protection that this can involve.

In the second, the French patent with publication number FR2561182, the height of the lumbar region is adjusted by means of a worm screw increasing the space in the lower area, with the consequences described previously for the medullary area. In this seat the displacement of the element adjustable in height affects the entire side and rear assembly as a single block which comprises the lumbar region.

Systems are also known for adjusting the bench of the seat such as those which are disclosed in the patents with publication number DE4405653 and US4491365, which present complex mechanisms formed by a great quantity of bars which confer great bulkiness upon the final seat and a high cost for their production.

The adjustable seat for motor vehicle of the present invention presents means to adjust the inclination of the bench, the height of the lumbar region and the height of the headrest independently, as well as great lightness and compactness of both the back and the seat structure, which allows the final volume of the same to be greatly reduced improving the habitability of the interior of the vehicle.

### DESCRIPTION OF THE INVENTION

The present invention relates to an adjustable seat for motor vehicle which has means to adjust the inclination of the bench, the inclination of the seat, the adjustment in height of the cushion of the lumbar area and the inclination of the headrest.

The seat is formed by a rigid interior structure which is that which supports the different forces which arise from the body resting on each area of the seat. This structure is covered by different cushions which adapt to the different parts of the user's body which rest on them.

The structure of the base allows an adjustment of the inclination of the bench by means of a wedge system located in the front or rear part of a fixed arm, which on sliding on this fixed arm of the structure of the base, causes the rotation of an arm moveable around an axle of rotation mounted on the end opposite the wedge, due to an oblique groove provided in the latter.

The structure of the base can comprise a single assembly of the elements described above, conformed in such a way that they are capable of supporting the forces in the area of the bench, or by more than one assembly of elements so that the forces are distributed among them.

The adjustment in height of the lumbar area is achieved by a means of linear actuation which transmits the movement to a cushion of the lumbar area with a central vertical cavity, and not to the load-bearing structure of the back.

When attention is drawn to the positional references which the elements of the back of the seat adopt for describing the adjustment thereof in height, these will refer to positions of the back according to the longitudinal direction indicated by their main axis, independently of the inclination of the back. Thus for example vertical displacements will be cited although the back has a certain inclination.

On this load-bearing structure of the back a second cushion is secured for supporting the area of the shoulders, and to support the medullary area a third medullary cushion is included integral with the cushion of the area of the shoulders and located in a central vertical cavity of the cushion of the area of the shoulders. The cushion of the lumbar area, by means of a lumbar supplement located in the central vertical cavity compresses the medullary cushion to allow the adjustment to different heights.

In the event of wishing to increase the height of the back the cushion of the lumbar area is displaced downwards with the consequent expansion of the medullary cushion which always adapts to the space available. Due to the high breathability of this medullary cushion, the seat is provided with ventilation in the area of the occupant's back.

The adjustment of the inclination of the seat is carried out by acting on a wheel for adjustment of the inclination which transmits the rotation to the back of the seat by means of for example, any of the systems known in the state of the art.

The adjustment of the inclination of the headrest is carried out by means of several assemblies of two bars which are joined, by means of articulations, one of them to the headrest and the other to the cushion of the area of the shoulders which in turn are joined on the free ends by means of another articulation. In addition the bars can have the consequent butts in the articulations which define the extreme positions of retraction and extension.

Also, the adjustable seat for motor vehicle has the following characteristics:
- *Lighter.* The structure which supports the seat is based on a central sheet for the back and a central sheet for the bench. This configuration minimizes the quantity of material and makes it lighter. In the assembly process, the tooling can be lighter and, therefore, cheaper, reducing for example the investment when building an assembly line. Likewise, the total weight of the vehicle is decreased, with which there is an evident saving in fuel.
- *Less bulky.* The configuration of the seat makes the thickness of its areas, back and legs, more reduced. The advantages are obtained from the very fabrication of the components which form the seat, because pieces of smaller volume signify less space in the warehouse and greater efficacy in the transport, since more pieces can fit in a given volume.
   The manufacturing tools are smaller, whereby the factory space necessary is smaller, saving in floor area and the occupation of the same.
   When mounted in the vehicle, the occupiable space of the same is greater, that is, for a given vehicle the habitability achieved is that of a vehicle of superior ranking. Or, on the contrary, to achieve the same habitability in a vehicle category, the overall size of the same can be reduced, with savings in materials, consumption and other features.
- *Greater breathability.* The configuration of the seat provides the back area with an open central space in the load-bearing structure which serves to provide ventilation for the occupant's back. To maintain this area of the back as open as possible even when including a cushion and fabric, the most breathable materials known are used, such as a mesh with a very big cell size. A similar situation occurs in the area of the bench. A seat capable of breathing makes the occupant feel more comfortable, even with high external temperatures and long driving hours, which results in greater safety and attention.
- *Better ergonomics.* Since the structure in question is simpler, the adaptation of the same to meet ergonomic requirements is more easily achieved.
   The bending of the structure of the back and of the legs is done by merely copying the curvature of the human body in the structure of both, without adding other pieces or strengthening. For this simplicity, the inclusion of adjustable elements is also easily achieved. The adjustment of the lumbar area independently of the rest of the seat is achieved merely by sliding the cushion of this area on the structure; any mechanism can be added, keeping in mind that said mechanism need only move the cushion, and not a structure attached to the same. The bench and headrest adjustment is also easily achieved because the weight and volume of these pieces is reduced, as mentioned above.
- *Fewer pieces.* The configuration of the seat greatly reduces the number of pieces. It is clear that a smaller number of pieces is an important saving in an assembly, from the fabrication of the same to the transport to the assembly line. In like manner, the reduction in pieces is an important factor both during the life of the vehicle and at the end of the same. Repairing and replacing pieces in the workshop are simpler, and it is not necessary to reiterate the saving in the handling of references and of the volume occupied in the warehouses. Also, the final recycling of the vehicle is simpler.
- *Operational simplicity.* The simplicity in construction is reflected in operational simplicity. Thus, operational simplicity, in this case mechanical, makes handling more intuitive and satisfactory for the end user.

### DESCRIPTION OF THE DRAWINGS

The present descriptive specification is supplemented with a set of drawings which illustrate, but in no way restrict the preferred embodiment of the invention.

Figure 1 shows an exploded view in perspective of the adjustable seat for motor vehicle of the invention.

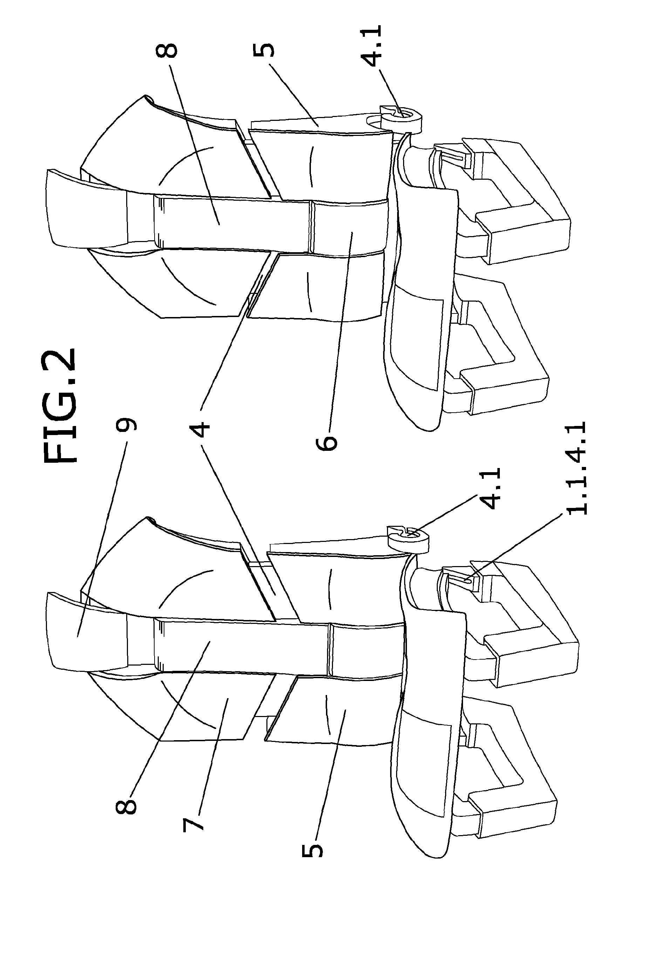

Figure 2 shows two views in perspective of the adjustable seat for motor vehicle of the invention. To the left the seat is shown with the cushion of the lumbar area in a lower position and to the right the seat is shown with the cushion of the lumbar area in an upper position.

Figure 3 shows a schematic of the headrest in a raised position and another retracted, to the left and right respectively.

Figure 4A shows a schematic of the adjustment of the cushion of the lumbar area in perspective, whilst in the detail 4B a transversal section is shown at the height of the cushion of the lumbar area.

Figure 5 shows a side view of the structure of the base in the lowest and highest positions in height on the left and right respectively.

### DETAILED EXPLANATION OF THE INVENTION

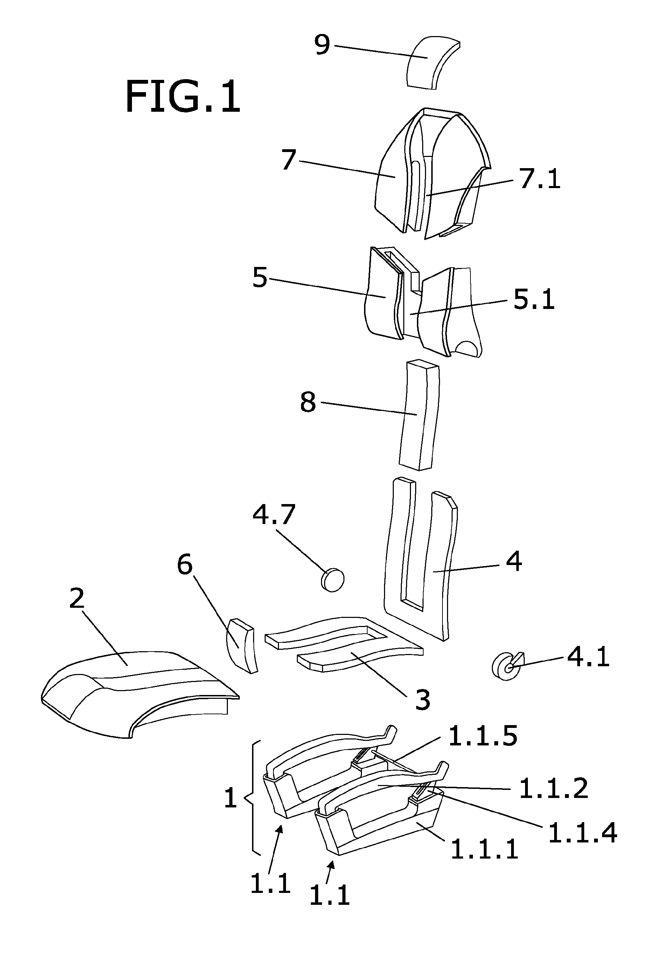

Figure 1 shows an exploded view in perspective of the adjustable seat for motor vehicle according to an example of embodiment in which the entire assembly of the seat rests on a structure of the base which hereinafter will be termed load-bearing structure (1) of the base.

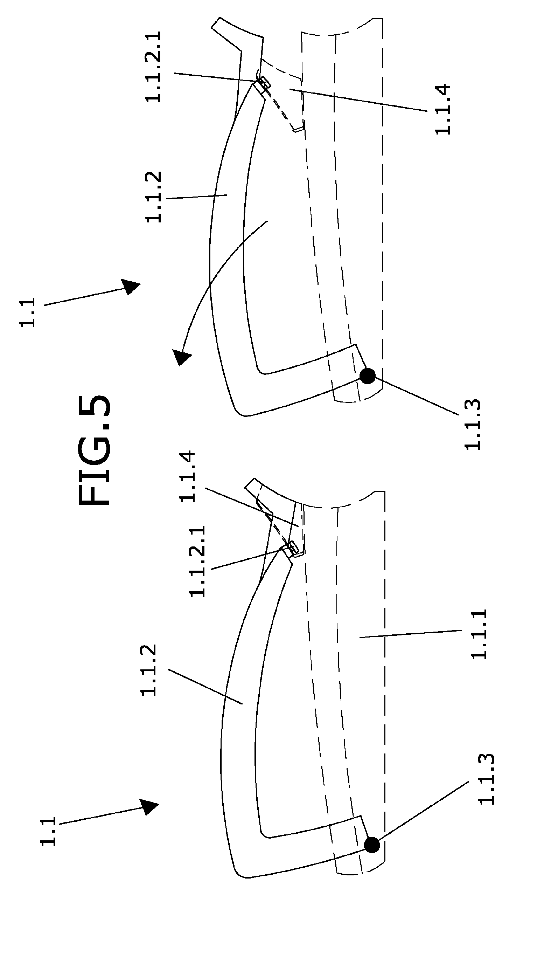

This load-bearing structure (1) of the base is formed by two units (1.1), each of which has a fixed arm (1.1.1) which acts as an anchor element to the structure of the vehicle, a moveable arm (1.1.2) connected in its front part to the fixed arm (1.1.1) by means of an articulation (1.1.3), (shown in detail in Figure 5) and in its rear part to a wedge (1.1.4) by means of a grooved nipple (1.1.2.1) or similar of the moveable arm (1.1.2).

In Figure 5 it is observed that the wedge (1.1.4) is located on the fixed arm (1.1.1) so that on acting horizontally by any means on said wedge (1.1.4), the grooved nipple (1.1.2.1) of the moveable arm (1.1.2) runs along a groove (1.1.4.1) of the wedge (1.1.4) forcing the moveable arm (1.1.2) to rotate by means of the articulation (1.1.3), whereby it is possible to adjust the inclination of the bench.

By grooved nipple (1.1.2.1) is to be understood any element which has the movement restricted in the direction of insertion in the groove (1.1.4.1) but which at the same time can slide along it.

The action on the wedge (1.1.4) can be carried out manually by means of an actuating wheel or electrically by means of a motor.

So that the two wedges (1.1.4) move in unison they have been joined by means of a rod (1.1.5) which at the same time confers rigidity on the load-bearing structure (1) of the base.

A bench cushion (2) is located on the moveable arms (1.1.2) thereby conferring the appropriate configuration. This bench cushion (2) has internally a structural element which will be termed bench load-bearing structure (3).

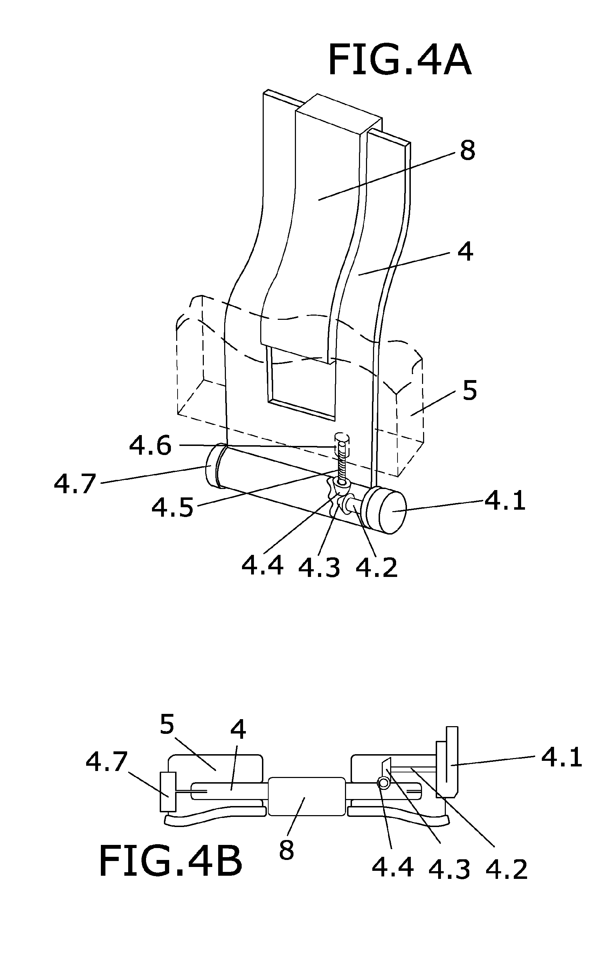

In Figures 4A and 4B the structural element of the back is observed, which will be termed load-bearing structure (4) for back, the lower end of which has a wheel (4.1) for adjustment of the height.

By means of this wheel (4.1) for adjustment of the height, which is joined to an axle (4.2), a drive pinion (4.3) is made to rotate which meshes with a receiving pinion (4.4) and transmits the movement to it.

This receiving pinion (4.4) houses in its interior a screw (4.5) with a threaded ferrule (4.6) on its end which serves to transmit the movement to a cushion of the lumbar area (5) which covers the lower part of the load-bearing structure (4) for back producing the displacement of said cushion of the lumbar area (5) in the vertical direction.

Depending on the direction in which the wheel (4.1) for adjustment of the height is turned, the displacement of the cushion (5) of the lumbar area will be upward or downward.

In a central vertical cavity (5.1) of the cushion (5) of the lumbar area an element termed lumbar complement (6) is inserted which simulates the form of that area of the user's back. This lumbar complement (6) is integral with the cushion (5) of the lumbar area so that there is no relative movement between one (5) and the other (6).

In turn, there is a wheel (4.7) for adjustment of the inclination integral with the load-bearing structure (4) for back which on being turned establishes the inclination of the back of the seat.

The upper part of the load-bearing structure (4) for back is covered by a cushion (7) of the area of the shoulders which has a central vertical cavity (7.1), one (4) and the other (7) being integral.

Attached to the lumbar complement (6) and in the central vertical cavity (7.1) of the cushion (7) of the area of the shoulders and in the load-bearing structure (4) for back, there is a medullary cushion (8) integral with the cushion (7) of the area of the shoulders.

When the wheel (4.1) for adjustment of the height makes the cushion (5) of the lumbar area ascend, the lumbar complement (6) ascends equally and pushes the medullary cushion (8), which tends to be compressed because it is joined to the cushion (7) of the area of the shoulders which remains fixed.

On the other hand, if the wheel (4.1) for adjustment of the height makes the cushion (5) of the lumbar area descend, the lumbar complement (6) descends equally and allows the medullary cushion (8) to expand because it remains joined by its upper part to the cushion (7) of the area of the shoulders which remains fixed.

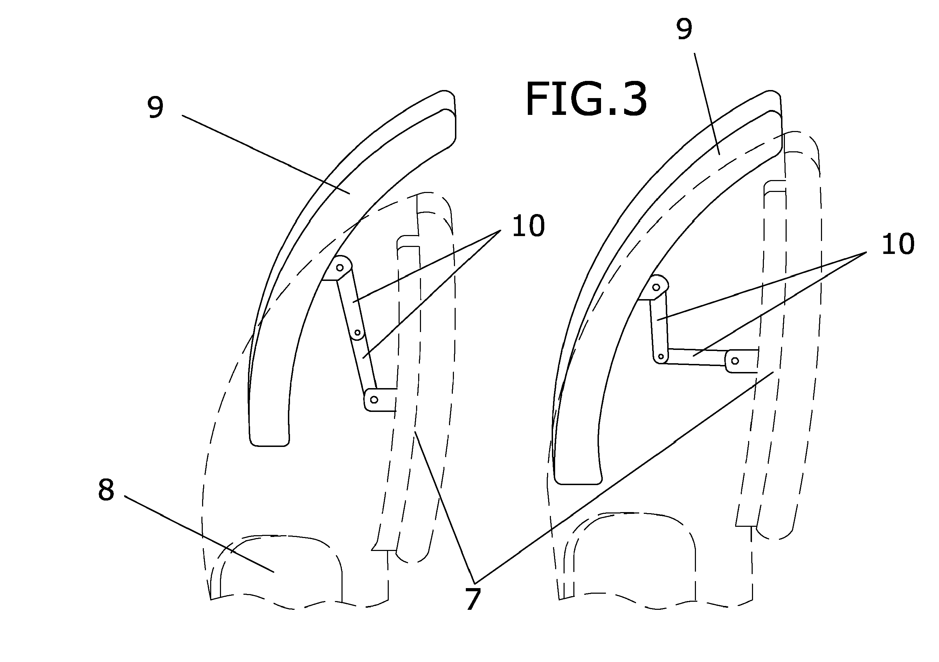

In Figure 3 the upper part of the seat is observed with a headrest (9) which is joined to the cushion (7) of the area of the shoulders by means of several assemblies of two bars (10). With this assembly of two bars (10) the adjustment of the headrest (9) in any intermediate position is obtained between the two extremities of the same.

The essential nature of this invention is not altered by variations in materials, form, size and arrangement of the component elements, described in a non-restrictive manner, this being sufficient for an expert to proceed to its reproduction.

## Claims

1. Adjustable seat for motor vehicle which has a load-bearing structure (1) of the base, a bench cushion (2) which rests on a bench load-bearing structure (3), which also has a load-bearing structure (4) for back and means of adjustment of the inclination of the load-bearing structure (4) for back, **characterized in that** the load-bearing structure (1) of the base has at least one assembly formed by a moveable arm (1.1.2) joined on its front or rear part with an articulation (1.1.3) to a fixed arm (1.1.1) which acts as anchor element to the structure of the vehicle, on which a wedge (1.1.4) is located which has an oblique groove (1.1.4.1) which guides a grooved nipple (1.1.2.1) of the moveable arm (1.1.2) mounted on the end opposite to the articulation (1.1.3) so that by the horizontal actuation of the wedge (1.1.4) the grooved nipple (1.1.2.1) runs along the oblique groove (1.1.4.1) of the wedge (1.1.4) forcing the turning and elevation of the moveable arm (1.1.2) about the articulation (1.1.3) and regulating the inclination and height of the bench load-bearing structure (3).

2. - Adjustable seat for motor vehicle according to claim 1 **characterized in that** on the upper part of the load-bearing structure (4) for back there is a cushion (7) which corresponds to the area of the shoulders where in a central vertical cavity (7.1) of the latter (7) a medullary cushion (8) is fixed, where also, in the lower part of the load-bearing structure (4) for back there is a vertically displaceable lumbar assembly (5, 6) with a central vertical cavity (5.1) wherein the ascent or descent of the lumbar assembly (5, 6) gives rise to the compression or expansion respectively according to the direction of the back, of the medullary cushion (8).

3. - Adjustable seat for motor vehicle according to claim 2 **characterized in that** the load-bearing structure (4) for back has a wheel (4.1) for adjustment of the height which is joined to an axle (4.2) with a drive pinion (4.3) which meshes with a receiving pinion (4.4) joined to a screw (4.5) with a threaded ferrule (4.6) transmitting the movement to the lumbar assembly (5, 6).

4. - Adjustable seat for motor vehicle according to claim 2 **characterized in that** the lumbar assembly (5, 6) is formed by a cushion (5) of the lumbar area and a central lumbar complement (6) which occupies the central vertical cavity (5.1) in its lower part.

5. - Adjustable seat for motor vehicle according to claim 1 **characterized in that** a headrest (9) is joined to the cushion of the area of the shoulders (7) by means of at least one assembly of two bars (10), whereby the adjustment in height and inclination of the headrest (9) is obtained.

6. - Adjustable seat for motor vehicle according to claim 5 **characterized in that** the headrest (9) is joined to the cushion of the area of the shoulders (7) by means of two assemblies of two bars (10).

7. - Adjustable seat for motor vehicle according to claim 5 **characterized in that** the headrest (9) is formed by a central structure and a jacket.

8. - Adjustable seat for motor vehicle according to claim 1 **characterized in that** the load-bearing structure (1) of the base has two assemblies of fixed arm (1.1.1), moveable arm (1.1.2), articulation (1.1.3) and wedges (1.1.4).

9. - Adjustable seat for motor vehicle according to claim 8 **characterized in that** the two wedges (1.1.4) are joined by means of a rod (1.1.5).

10. - Adjustable seat for motor vehicle according to claim 1 **characterized in that** the structure for back (4) has a wheel for adjustment of the inclination (4.7) of the back of the seat.

11. ― Adjustable seat for motor vehicle according to claim 1 **characterized in that** the operation of the wedge (1.1.4) is carried out manually by means of an actuating wheel.

12. - Adjustable seat for motor vehicle according to claim 1 **characterized in that** the operation of the wedge (1.1.4) is carried out electrically by means of a motor.

13. - Adjustable seat for motor vehicle according to claim 1 **characterized in that** the bench load-bearing structure (3) is U-shaped.

14. - Adjustable seat for motor vehicle according to claim 1 **characterized in that** the load-bearing structure (4) for back is U-shaped.
